# EUROPEAN PATENT APPLICATION

(11) **EP 4 800 294 A1**
(43) Date of publication of application: **02.09.2026**
(21) Application number: 26161357.4
(22) Date of filing: 27.02.2026
(51) Int. Cl.: F21V 8/00, F21V 7/00

(54) **DUAL PATH LIGHT GUIDE**

(30) Priority: 28.02.2025 US 202563765115 P
(71) Applicant: LMPG Inc., Longueuil QC J4G 2H9 (CA)
(72) Inventor: Santoro, Scott, Delta, British Columbia, V4L 1K6 (CA); Wong, Kenton Keng Ting, Burnaby, British Columbia, V3J 1C2 (CA)
(74) Representative: Petraz, Gilberto Luigi

(57) **Abstract**

A light guide for an LED luminaire includes a light receiving surface, a concave first surface, a second surface, and an extraction surface. The concave first surface is positioned to receive a first light portion of incident light. A best-fit plane of this first surface is angled between 6° and 48° relative to an axis perpendicular to the light receiving surface, reflecting the first light portion via total internal reflection downstream. The second surface is downstream and offset from the first surface, allowing a second light portion to bypass the first surface. The second surface reflects this second light portion to create a virtual image of the light source outside the guide. The extraction surface is configured to extract both the first and second light portions, enabling controlled distribution of direct and indirect light while minimizing color separation and imaging artifacts.

## Description

### Technical Field

This invention relates to light guides for luminaires.

### Background

The control of light emitted from LED sources in luminaires presents several optical design challenges, particularly in achieving uniform beam distribution while minimizing color separation and unwanted imaging artifacts. Conventional approaches often rely on either total internal reflection (TIR) optics or refractive optics, each of which has inherent limitations. TIR optics are highly effective at collimating light emitted at higher angles but struggle to control light emitted directly below the source without additional refractive components. Refractive optics, while capable of bending light to achieve specific distributions, are subject to chromatic dispersion, where different wavelengths refract at slightly different angles, leading to color separation in the resulting beam. Additionally, when the refractive optic is not significantly larger than the light source, variations in color and intensity across the LED surface can be imaged onto the output beam, further degrading beam uniformity. Improved light guides that manage beam shaping and distribution, while mitigating the drawbacks of traditional collimating and refractive systems, are desirable.

### Summary of the Invention

This invention provides optical solutions for luminaires that enhance beam uniformity and control light distribution using a dual-path internal reflection architecture.

An aspect of the invention features a light guide for an LED luminaire. This light guide includes a light receiving surface designed to receive incident light from a light source. A concave first surface is positioned to receive a first light portion of the incident light. To facilitate total internal reflection downstream within the light guide, a best-fit plane of this first surface is angled between 6° and 48° (and more specifically between 20° and 30°) relative to an axis perpendicular to the light receiving surface.

The guide further incorporates a second surface, downstream and offset- both laterally and longitudinally-from the first surface. This offset allows a second light portion of the incident light to bypass the first surface and reach the second surface. The second surface reflects this second light portion to create a virtual image of the light source outside the light guide. In certain embodiments, the second surface and the extraction surface form a co-planar continuous surface. The first surface may utilize a plurality of facets or a curve to provide concavity, and either the first surface or the extraction surface may include flutes to aid in homogenization.

To further direct the light, the guide may include a third surface that receives the first light portion and reflects it downstream, along with a fourth surface that receives the second light portion. This fourth surface utilizes light redirecting elements, such as facets or steps, to direct the second light portion toward the extraction surface. In specific configurations, a hook region with a four-sided shape and a tip provides a series of internal reflection surfaces to redirect the first light portion out of the tip and back into the guide toward the extraction surface. The first and third surfaces can be configured to focus the first light portion at a focal point approximately halfway along the extraction surface to optimize re-collimation off the hook region.

Another aspect of the invention involves a luminaire that includes a housing, a light source, a reflector, and the light guide described in the previous aspect. In this configuration, the guide directs the first light portion at the reflector to provide an indirect light component, while the second light portion provides a direct light component.

For precise beam aiming, the angle of the best-fit plane of the fourth surface may be greater than that of the third surface. The light guide in this luminaire may feature surfaces that taper toward each other or utilize a step to separate the first surface and the extraction surface, shifting the latter downstream to prevent beam overlap. Additionally, the third and fourth surfaces may be partially radially configured or feature alternating light redirecting elements to create a plurality of distinct beams.

A further aspect of the invention relates to a luminaire including a housing, a light source, and the dual-path light guide, configured such that both the first and second light portions provide direct light. This luminaire can include a staging optic positioned between the light source and the light guide. This staging optic utilizes a first collimating lens abutting the light receiving surface, and may further include a second collimating lens integrated into the light receiving surface itself. Alternatively, the light receiving surface may employ a pyramidal collimating lens, with the light guide taking either a linear or annular form to achieve specific distributions like batwing, delta, or teardrop patterns.

### Brief Description of Drawings

The accompanying drawings illustrate non-limiting example embodiments of the invention.
Figure 1 is a side cross-sectional view of a light guide according to an embodiment.
Figure 2 is a partial side cross-sectional view of a luminaire incorporating a light guide according to the embodiment shown in Figure 1, showing the light path of a first light portion.
Figure 3 is a partial side cross-sectional view of a luminaire incorporating a light guide according to the embodiment shown in Figure 1, showing the light path of a second light portion.
Figure 4 is a close up view of the hook region of the luminaire according to the embodiment shown in Figure 2.
Figure 5 a partial side cross-sectional view of a luminaire incorporating a light guide according to an embodiment, showing the light path of a first light portion.
Figure 6 is a side cross-sectional view of a light guide according to an embodiment.
Figure 7 is a side cross-sectional view of a light source and a light guide according to the embodiment shown in Figure 6, showing the light path of a first light portion.
Figure 8 is a side cross-sectional view of a light source and a light guide according to the embodiment shown in Figure 6, showing the light path of a second light portion.
Figure 9 is a front view of a light source and a light guide according to an embodiment.
Figure 10 is a front perspective view of a light guide according to the embodiment shown in Figure 9.
Figure 11 is a side cross-sectional view of a luminaire incorporating a light guide according to an embodiment.
Figure 12 is a side cross-sectional view of a luminaire according to the embodiment shown in Figure 11.
Figure 13 is a partial side cross-sectional view of a luminaire according to the embodiment shown in Figure 11, showing the light path of a first light portion.
Figure 14 is a partial side cross-sectional view of a luminaire according to the embodiment shown in Figure 11, showing the light path of a second light portion.
Figure 15 is a partial side cross-sectional view of a luminaire according an embodiment, showing the light path of a first light portion.
Figure 16 is a partial side cross-sectional view of a luminaire according to the embodiment shown in Figure 15, showing the light path of a second light portion.
Figure 17 is an optical distribution plot of exemplary simulated light rays of the first light portion and second light portion emitted form a light guide according to the embodiment shown in Figure 1.
Figure 18 is an optical distribution plot of exemplary simulated light rays of the first light portion emitted form a light guide according to the embodiment shown in Figure 6.
Figure 19 is an optical distribution plot of exemplary simulated light rays of the second light portion emitted form a light guide according to the embodiment shown in Figure 6.
Figure 20 is an optical distribution plot of exemplary simulated light rays of the first light portion and second light portion emitted form a light guide according to the embodiment shown in Figure 6.
Figure 21 is an optical distribution plot of exemplary simulated light rays of the first light portion and second light portion emitted form a light guide according to the embodiment shown in Figures 13 and 14.
Figure 22 is an optical distribution plot of exemplary simulated light rays of the first light portion and second light portion emitted form a light guide according to the embodiment shown in Figures 15 and 16.
Figure 23 a perspective view of a light source and a light guide according to an embodiment.
Figure 24 a perspective partial view of a light source and a light guide according to the embodiment shown in Figure 24.
Figure 25 is a front view of a light source and a light guide according to an embodiment. Figure 26 sets out three distributions achieved by light guides according to embodiments.

### Description

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive, sense.

The term "generally" as used herein represents a value, amount, or characteristic that predominantly includes or tends toward a particular value, amount, or characteristic. As an example, in certain embodiments, as the context may dictate, the term "generally vertically" can refer to something that departs from exactly vertical by ±10 degrees.

The term "proximal" and "upstream" as used herein with respect to features of the light guide means a position relatively closer to, or direction toward, a light receiving face of the light guide, and the term "distal" and "downstream" as used herein means a position relatively farther away from, or direction away from, the light receiving face of the light guide.

The term "longitudinal" or "longitudinally" as used herein with respect to features of the light guide means a direction or orientation parallel to the proximal/distal axis, and the term "lateral" or "laterally" as used herein with respect to features of the light guide means a direction or orientation perpendicular to the proximal/distal axis.

Aspects of the invention relate to light guides using dual path internal reflection optics to control the beam below the light source. Aspects of the invention also relate to luminaires incorporating such light guides.

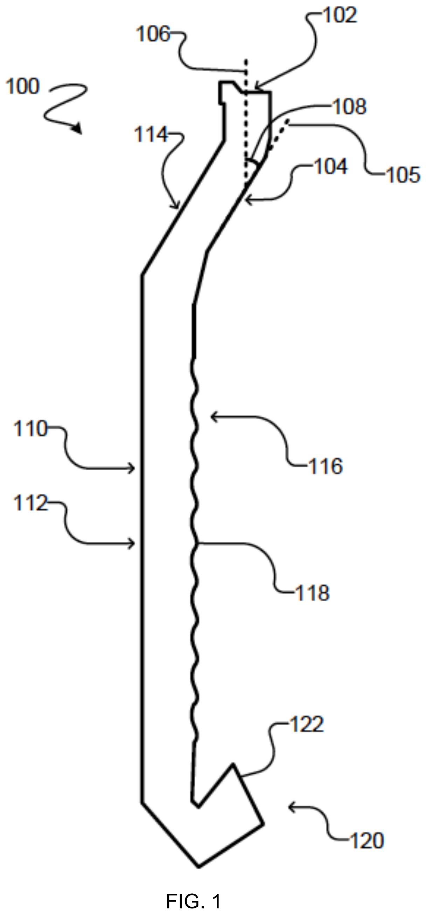

Figures 1 to 4 show a light guide 100 according to an embodiment. Light guide 100 may for example be formed by extrusion. Light guide 100 includes a light receiving surface 102 that is configured to receive incident light from a light source. A first surface 104 is positioned to receive a first light portion of the incident light. First surface 104 is slightly concave. The term "concave" as used herein means from the perspective of light travelling within the light guide, so here when hitting first surface 104. In some embodiments surface 104 may be concave and faceted, i.e., consist of a plurality of facets, with each facet individually configured to aim light at the desired angle). In other embodiments surface 104 may concave and curved (i.e. smooth).

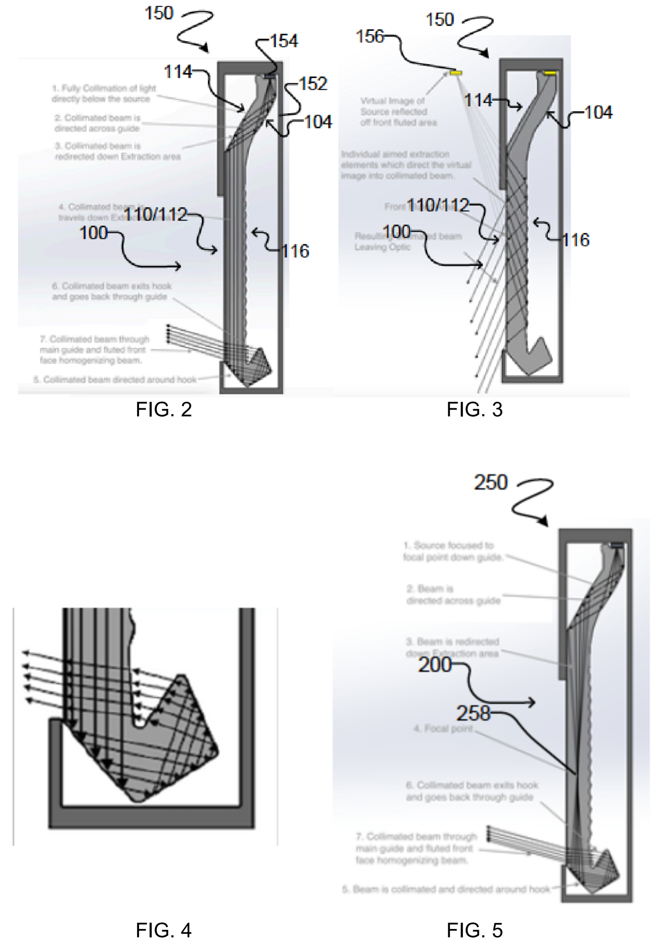

As shown in Figure 1, first surface 104 defines a best-fit plane 105. "Best-fit plane" means an approximate planar reference based on the geometry of surface 104, whether it is smoothly curved, or composed of a plurality of facets. Angle 108 is defined between plane 105 and an axis 106 perpendicular to light receiving surface 102. As shown in Figure 2, angle 108 ensures that first surface 104 collimates the first light portion via total internal reflection and directs the first light portion along the light guide 100. In some embodiments, angle 108 is between 6° and 48°, or between 20° and 30°. In some embodiments first surface 104 may be fluted.

A second surface 110 is downstream and offset from first surface 104, allowing a second light portion of the incident light to bypass first surface 104 and reach second surface 110, as shown in Figure 3. In some embodiments, second surface 110 is laterally and longitudinally offset from first surface 104. Second surface 110 is planar and configured to reflect the second light portion to create a virtual image 156 of the light source outside light guide 100. In some embodiments surface 110 may be slightly concave.

A third surface 114 receives the collimated first light portion from first surface 104. Third surface 114 is angled generally parallel to first surface 104, and directs the first light portion downstream along light guide 100. In some embodiments, third surface 114 may be fluted. In some embodiments, third surface 114 may be slightly concave in a similar manner to first surface 104; in such embodiments, third surface 114 may further collimate the first light portion. In some embodiments first surface 104 may not collimate the first light portion in which case third surface 114 is the initial surface in light guide 100 to collimate the first light portion.

As shown in Figure 4, light guide 100 also has a hook region 120 downstream of second surface 110. In some embodiments, hook region 120 has a four-sided shape and a tip 122. Hook region 120 comprises a series of internal reflection surfaces that receives the collimated first light portion travelling through light guide 100 from third surface 114 and redirects it via total internal reflection out of tip 122. After exiting tip 122 the collimated first light portion re-enters light guide 100 towards an extraction surface 112. Extraction surface 112 also spans the area of light guide 100 between second surface 110 and hook region 120.

Light guide 100 also has a fourth surface 116, positioned to receive the second light portion from second surface 110, and direct the second light portion to extraction surface 112. Fourth surface 116 includes light redirecting elements 118, such as facets, for directing the second light portion. In some embodiments each light redirecting element 118 may be individually aimed based on its proximity to virtual image 156 and desired exit angle of the second light portion.

Extraction surface 112 extracts both the first light portion and the second light portion out of light guide 100. In some embodiments second surface 110 and extraction surface 112 are co-planar and/or form a single continuous surface. In some embodiments extraction surface 112 may be fluted. The first light portion exits extraction surface 112 to provide, for example, an indirect uplight component. The second light portion exits extraction surface 112 to provide, for example, a direct downlight component.

Figures 2 to 4 show a portion of a luminaire 150 incorporating light guide 100. Luminaire 150 may have two light guides 100 spaced apart by a central upper reflector (not shown). Luminaire 150 includes a housing 152 and a light source 154 for each light guide 100. The first light portions from each light guide 100 may be directed toward the central upper reflector to provide indirect light, while the second light portions from each light guide provide direct light downward.

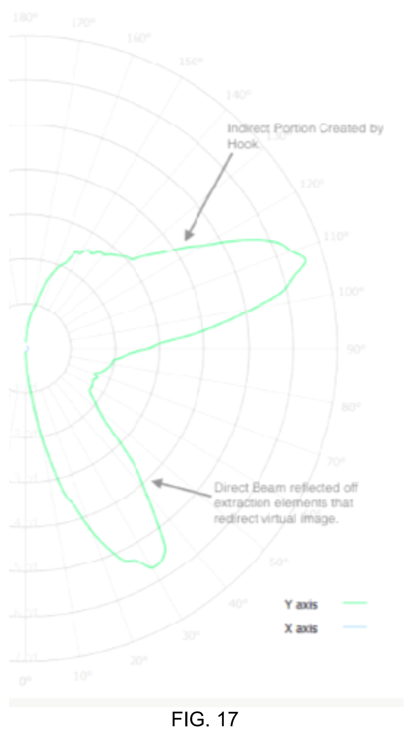

Figure 17 shows an optical distribution plot of exemplary simulated light rays emitted from a light guide 100 (in reverse to the orientations shown in Figures 1 to 4), including extraction of both the first light portion and second light portion.

Figure 5 shows a luminaire 250 incorporating a light guide 200 according to another embodiment. Luminaire 250 includes a housing 152, a light source 154, and a central reflector (not shown). Similar to light guide 100, light guide 200 comprises a first surface that collimates the first light portion, which is ultimately directed at the central reflector to provide indirect light. The first and third surfaces are configured to focus the collimated first light portion at a focal point 258 generally halfway downstream of the extraction surface between the first and third surfaces. The first light portion is re-collimated off a first internal reflection surface of the hook region. This focusing of the first light portion minimizes undesirable light interaction with light redirecting elements on the fourth surface. The second light portion is extracted directly from light guide 200 to provide direct illumination in the same manner as light guide 100.

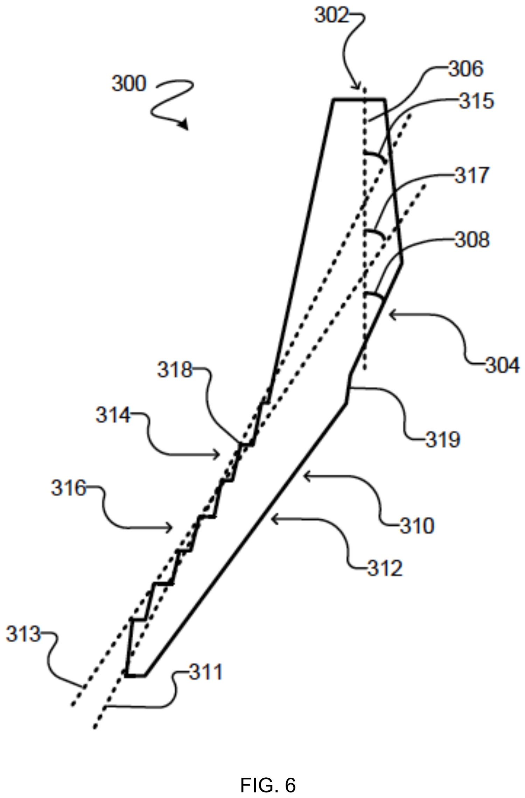

Figures 6 to 8 show a light guide 300 according to another embodiment. Light guide 300 may be formed for example by injection molding. Light guide 300 shares similarities with light guide 100, with elements numbered in the 300 series corresponding to their counterparts in the 100 series. Accordingly, elements 302, 304, 306, etc., function and vary in a similar manner to elements 102, 104, 106, respectively, unless stated otherwise.

Light guide 100 and light guide 300 also have numerous differences, as is evident at least from their different shapes. Light guide 300 lacks a hook region. Second surface 310 and extraction surface 312 at least overlap and, in some embodiments, are co-extensive. Second surface 310/extraction surface 312 and third surface 314 taper towards each other.

Third surface 314 and fourth surface 316 are on a same major side of light guide 300. Fourth surface 316 is downstream of third surface 314. Third surface 314 defines a best-fit plane 311. "Best-fit plane" means an approximate planar reference based on the geometry of surface 314, whether it is planar, curved, or composed of a plurality of facets or steps. Angle 315 is defined between plane 314 and an axis 306 perpendicular to light receiving surface 302. Fourth surface 316 defines a best-fit plane 313. "Best-fit plane" means an approximate planar reference based on the geometry of surface 316, whether it is planar, curved, or composed of a plurality of facets or steps. Angle 317 is defined between plane 316 and an axis 306 perpendicular to light receiving surface 302. As the first light portion and the second light portion do not overlap, this allows angle 316 to be greater than angle 315 to allow these two surfaces to aim their own distinct beams (i.e., resulting in two distinct beams).

In the embodiment shown in Figures 6 to 8, light redirecting elements 318 comprise a plurality of steps and, in some embodiments, corresponding surfaces of the steps are parallel.

First surface 304 and extraction surface 312 are on a same major side of light guide 300, opposite third surface 314 and fourth surface 316.

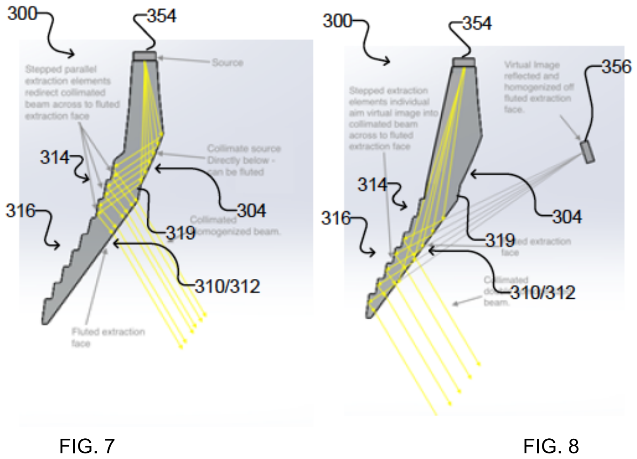

As shown in Figure 7, the first light portion reflects off first surface 304, then reflects off third surface 314, to be extracted as a collimated double homogenized beam from extraction surface 312; double homogenized since first surface 304 and extraction surface 312 may both be fluted. As shown in Figure 8, the second light portion reflects off extraction surface 312, then reflects off fourth surface 316, to be extracted as a collimated homogenized beam from extraction surface 312; the second light portion may also be double homogenized since it interacts with fluted second surface 310/fluted extraction surface 312 twice.

First surface 304 and extraction surface 312 are separated by a step 319. Step 319 shifts extraction surface 312 downstream longitudinally and laterally relative to first surface 304. This ensures that the first light portion reflecting off first surface 304 does not overlap with the second light portion reflecting off second surface 310, improving uniformity of each beam, and ensuring beam separation when desired.

In some embodiments, third surface 314 and fourth surface 316 may each be planar, curved, or composed of a plurality of facets or steps. For example in some embodiments third surface 314 may be curved and transition to a planar fourth surface 316, whereby planar fourth surface 316 aims the second light portion at a desired angle while curved third surface 314 aims the first light portion to a lower angle to both aim at a desired angle and create fill in the distribution.

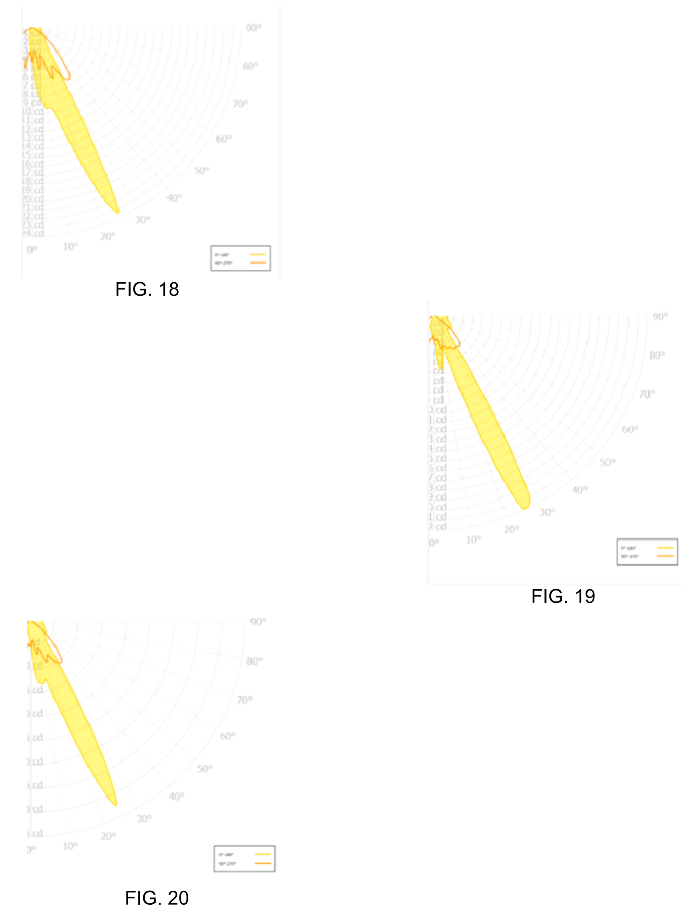

Figures 18, 19 and 20 show optical distribution plots of exemplary simulated light rays emitted from a light guide 300 from a single light source, where the rays are the first light portion only, the second light portion only, and the first and second light portions combined, respectively. In this embodiment the first and second portions are very similar and additive to create a strong distribution.

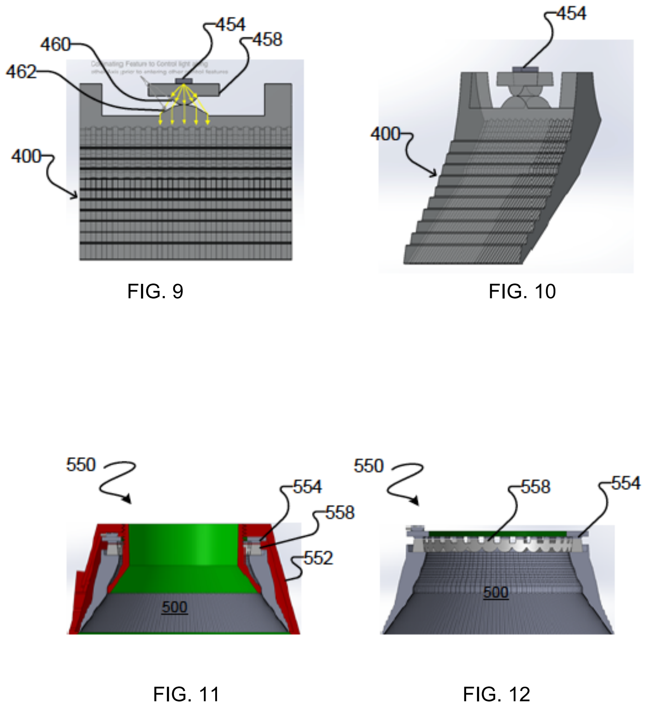

Figures 9 and 10 show a linear light guide 400 according to an embodiment. Light guide 400 is similar to light guide 300. Light guide 400 is coupled with a light source 454 and a staging optic 458. Staging optic 458 includes a first collimating lens 460 abutting the light receiving surface of the light guide 400. A second collimating lens 462 is integrated within the light receiving surface of light guide 400 itself. Collimating lenses 460 and 462 collimate light in an axis perpendicular to the light paths illustrated in the Figures. In some embodiments, instead of staging optic 458 with collimating lenses 460 and 462, light guide 400 may at its light receiving surface comprise other suitable collimating means such as pyramidal collimators as described in US patent no. 11,624,866 (LMPG Inc.).

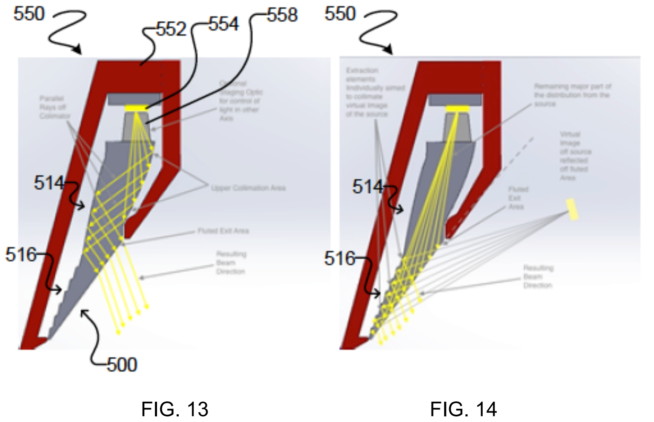

Figures 11 to 14 show an annular light guide 500 according to an embodiment and incorporated into a luminaire 550. Annular light guide 500 is similar to light guides 300 and 400 but annular in shape. Luminaire 550 includes a housing 552, a light source 554, and a staging optic 558 similar to staging optic 458. Third surface 514 is slightly convex (e.g. faceted or curved), and fourth surface 516 is stepped.

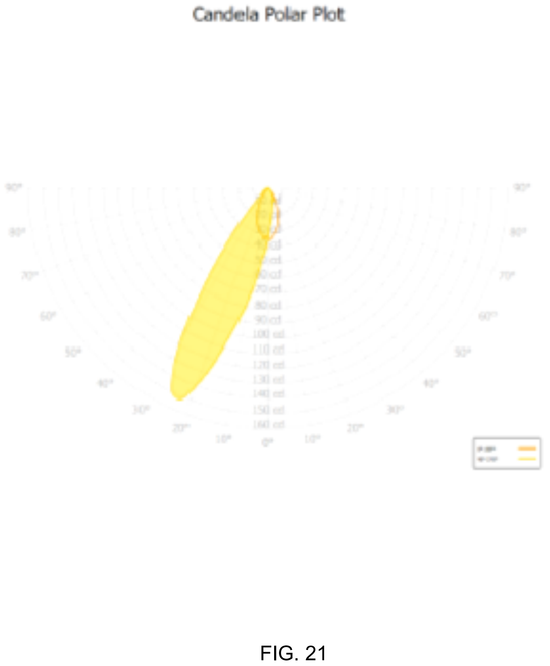

Figure 21 shows an optical distribution plot of exemplary simulated light rays emitted from a light guide 500 from a single light source, including extraction of both the first light portion and second light portion.

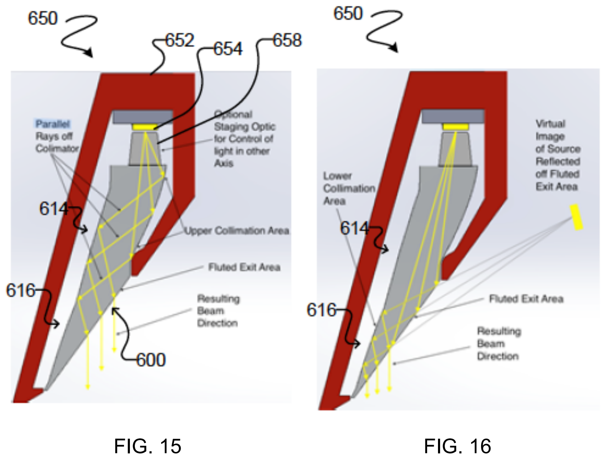

Figures 15 and 16 shown an annular light guide 600 according to another embodiment and integrated into a luminaire 650. The luminaire 650 includes a housing 652, a light source 654, and a staging optic 658. Light guide 600 is similar to light guides 300, 400 and 500. Third surface 614 and fourth surface 616 are both slightly convex (e.g. faceted or curved).

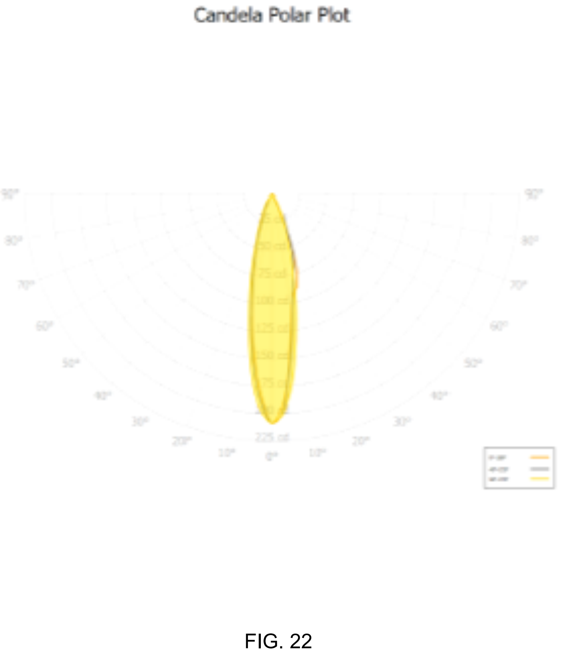

Figure 22 shows an optical distribution plot of exemplary simulated light rays emitted from a light guide 600 from a single light source, including extraction of both the first light portion and second light portion.

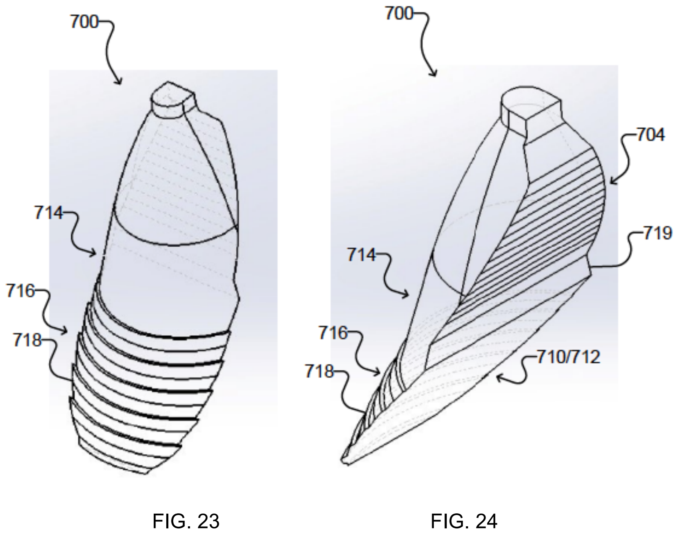

Figures 23 and 24 show a segment of light guide 700 according to another embodiment. Light guide 700 is similar to light guides 300, 400, 500 and 600, except third surface 714 and fourth surface 716 are partially radially configured around a position of the light source. Each individual cross sectional plane will show first and second light portions, and resulting polar plots, similar to light guides 300, 400, 500 and 600 but their cumulative effect allows for control of light distribution along an additional axis (e.g., the axis coming out of, and into, the page for Figure 6). In some embodiments, the single segments shown in Figure 23 and 24 may be repeated in a pattern in an annular or linear fashion, for example.

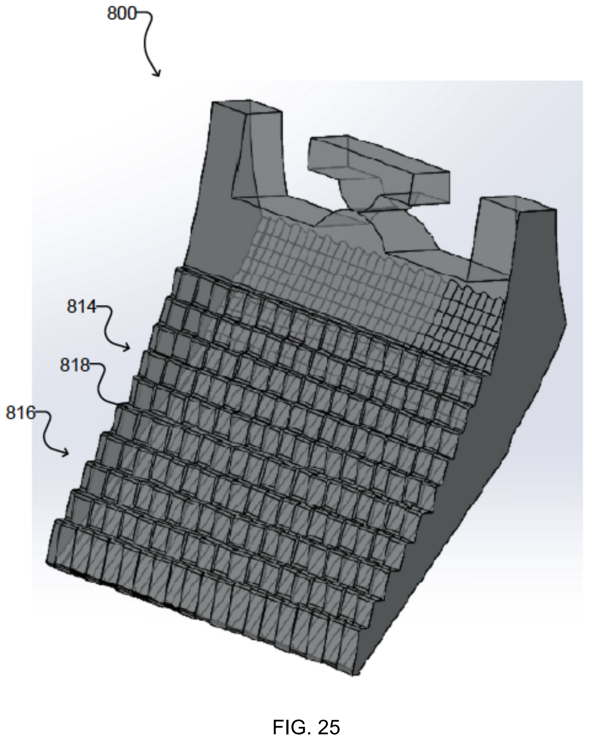

Figure 25 shows a light guide 800 according to another embodiment. Light guide 800 is similar to light guides 300, 400, 500 and 600, except third surface 814 and fourth surface 816 have alternating light redirecting elements 818 that are configured to create two different beams. The resulting distribution will be an average of the two beams in some embodiments, or could be weighted one way or the other in other embodiments. Figure 25 shows a linear version of light guide 800 but in other embodiments light guide 800 may be annular or other shapes.

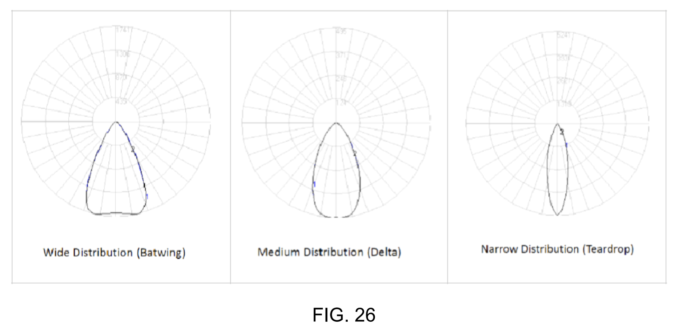

The third and fourth surfaces described herein may be configured (e.g. by varying their curvature, facets and/or steps) to modify the first and second light portions to achieve a desired distribution, for example varying from a wide distribution (batwing) to a medium distribution (delta) to a narrow distribution (teardrop) as shown in Figure 26 from multiple light source annular light guides according to the present invention. For example, Figures 15 and 16 set out embodiments resulting in a narrow distribution, while Figures 7 to 14 set out embodiments resulting in medium to wide distributions. The light guides described herein are thus advantageously configured so that most of the light emitted by the light source interacts with control elements, eliminating areas of uncontrolled light from the light source.

This application is intended to cover any variations, uses, or adaptations of the invention using its general principles. Further, this application is intended to cover such departures from the present disclosure as come within known or customary practice in the art to which this invention pertains and which fall within the limits of the appended claims. Accordingly, the scope of the claims should not be limited by the preferred embodiments set forth in the description, but should be given the broadest interpretation consistent with the description as a whole.

## Claims

1. A light guide for an LED luminaire, comprising:
a light receiving surface configured to receive incident light from a light source;
a concave first surface, positioned to receive a first light portion of the incident light, wherein a best-fit plane of the first surface is angled between 6° and 48° relative to an axis perpendicular to the light receiving surface, such that the first surface reflects the first light portion via total internal reflection downstream within the light guide;
a second surface, downstream and offset from the first surface, such that a second light portion of the incident light bypasses the first surface and reaches the second surface, the second surface being configured to reflect the second light portion to create a virtual image of the light source outside the light guide; and
an extraction surface for extracting the first light portion and the second light portion out of the light guide.

2. A light guide according to claim 1, wherein the second surface is laterally and longitudinally offset from the first surface, wherein a concavity of the first surface comprises a plurality of facets or a curve, and wherein the first surface and/or the extraction surface comprise flutes.

3. A light guide according to claim 1 or 2, wherein the second surface and the extraction surface are a co-planar continuous surface.

4. A light guide according to any one of claims 1 to 3, wherein the first surface is angled between 20° and 30° relative to the axis perpendicular to the light receiving surface.

5. A light guide according to any one of claims 1 to 4, comprising a third surface positioned to receive the first light portion from the first surface and angled generally parallel to the first surface, and reflects the first light portion downstream within the light guide; further comprising a fourth surface positioned to receive the second light portion from the second surface, and reflects the second light portion to the extraction surface; and wherein the fourth surface comprises light redirecting elements, wherein the light redirecting elements comprise facets.

6. A light guide according to any one of claims 1 to 5, comprising a hook region having a four-sided shape with a tip, comprising a series of internal reflection surfaces for receiving the first light portion from the third surface and redirecting the first light portion via total internal reflection out of the tip and back into the light guide toward the extraction surface, and wherein the first surface and/or the third surface are configured to focus the first light portion at a focal point at an approximate halfway point along the extraction surface, whereby the first light portion is re-collimated off a first internal reflection surface of the hook region.

7. A light guide according to any one of claims 1 to 6, wherein an angle between a best-fit plane of the fourth surface and an axis perpendicular to the light receiving surface is greater than an angle between a best-fit plane of the third surface and an axis perpendicular to the light receiving surface.

8. A light guide according to any one of claims 1 to 7 wherein the light redirecting elements comprise steps, and wherein the second surface and the extraction surface on one major side, and the third surface and the fourth surface on another major side, taper toward each other.

9. A light guide according to any one of claims 1 to 8 wherein the first surface and the extraction surface are on a same major side and are separated by a step, wherein the step shifts the extraction surface downstream longitudinally relative to the first surface, wherein the step shifts the extraction surface downstream longitudinally and laterally relative to the first surface.

10. A light guide according to any one of claims 1 to 9, wherein the third surface and the fourth surface are partially radially configured around a position of the light source, wherein light redirecting elements on the third surface and/or fourth surface comprise alternating light redirecting elements configured to create a plurality of beams.

11. A luminaire comprising:
a. a housing;
b. a light source; and
c. a light guide according any of one of claims 1 to 10.

12. A luminaire according to claim 11 whereby the first light portion and the second light portion provide direct light.

13. A luminaire according to claim 11 or 12, further comprising a staging optic between the light source and the light guide, wherein the staging optic comprises a first collimating lens abutting the light receiving surface of the light guide, wherein the light receiving surface of the light guide comprises a second collimating lens, whereby the first and second collimating lenses abut.

14. A luminaire according to any one of claims 11 to 13, wherein the light receiving surface of the light guide comprises a pyramidal collimating lens, and wherein the light guide is linear or annular.

15. A luminaire according to claim 11 further comprising a reflector, whereby the first light portion is directed at the reflector to provide indirect light, and whereby the second light portion provides direct light.
